# EUROPÄISCHE PATENTANMELDUNG

(11) **EP 0 755 662 A1**
(43) Veröffentlichungstag der Anmeldung: **29.01.1997**
(21) Anmeldenummer: 96110838.8
(22) Anmeldetag: 04.07.1996
(51) Int. Cl.: A61C 19/00

(54) **Lichtpolymerisationsgerät**

(30) Priorität: 24.07.1995 DE 29511927 U
(71) Anmelder: THERA Patent GmbH & Co. KG Gesellschaft für industrielle Schutzrechte, D-82229 Seefeld (DE)
(72) Erfinder: Herold, Wolf-Dietrich, 82229 Seefeld (DE); Koran, Peter, 82362 Weilheim (DE); Kürschner, Ralf, 82131 Gauting (DE)
(74) Vertreter: Strehl Schübel-Hopf Groening & Partner

(57) **Zusammenfassung**

Ein Gerät zur Lichtpolymerisation von Kunststoffen, insbesondere von Campherchinon als Photoinitiator enthaltenden Dentalmaterialien, weist als Lichtquelle einen im blauen Spektralbereich emittierenden Festkörperstrahler **12** auf Halbleiterbasis auf. Da dieser nur in einem schmalen nutzbaren Spektralbereich emittiert, wird jegliche Wärmestrahlung vermieden. Das gesamte Gerät ist als kleines, leichtes und handliches Gerät mit eingebauter Batterie **14** ausgestattet. Der vorzugsweise im Leuchtdioden(LED)-Modus betriebene Festkörperstrahler **12** kann unmittelbar an der auf den Behandlungsort richtbaren Spitze **17** des Gerätes angeordnet sein.

## Beschreibung

In der Dentaltechnik ist eine Vielzahl von Kunststoffen, sogenannten Composites, bekannt, die aufgrund eines methacrylatischen Härtungsmechanismus unter Lichteinstrahlung polymerisieren. Als wesentlichen Photoinitiator enthalten diese Materialien Campherchinon, der im blauen Spektralbereich breitbandig, mit einem Absorptionsmaximum bei etwa 472 nm, absorbiert.

Die Polymerisationsreaktion erfordert in einer sehr dünnen Schicht je nach Materialfarbe eine Lichtintensität von mindestens 1 bis 5 mW/cm². Bei der Polymerisation von Zahnfüllungen oder Zahnersatzteilen ist in der Praxis zur Erzielung eines ausreichenden Polymerisationsgrades und einer ausreichenden Polymerisationstiefe innerhalb einer vertretbaren Zeitspanne eine Lichtintensität von mindestens 250 mW/cm² erforderlich. Auf dem Markt befindliche dentale Polymerisationsgeräte emittieren Licht mit einer Intensität von etwa 400 bis 500 mW/cm², gelegentlich bis zu 700 mW/cm².

Bekannt sind Tischgeräte, bei denen das Licht im Gerät erzeugt und fokussiert und mittels eines flexiblen Lichtleiters von typisch 1,5 bis 2 m Länge an den Behandlungsort im Mund des Patienten geleitet wird. Abgesehen von den erheblichen Lichtverlusten an seinen Eintritts- und Austrittsflächen ist ein derartiger Lichtleiter mit seinem üblichen Durchmesser von etwa 10 bis 15 mm verhältnismäßig steif und unhandlich.

Bei anderen bekannten Geräten (vgl. etwa DE-A-3 840 984) wird das Licht in einem pistolenartig gestalteten Handteil erzeugt und fokussiert und mittels eines starren Faser- oder Quarz-Lichtleiterstabes an den Behandlungsort gebracht. Ein Hauptnachteil dieser Geräte besteht in der erheblichen Erwärmung des Handgerätes und, da es in der Nähe des Behandlungsortes gehalten wird, der bestrahlten Stelle selbst. Im übrigen wird auch bei diesem Gerätetyp das zur Stromversorgung des Handteils erforderliche Netzkabel als störend empfunden.

Bekannt sind auch akkubetriebene Geräte, die zwar unabhängig vom Netz bzw. einem Netzteil sind, wegen der erforderlichen hohen elektrischen Leistungen jedoch verhältnismäßig große und schwere Akkumulatoren benötigen und daher entsprechend unhandlich sind.

Die bekannten Lichtpolymerisationsgeräte arbeiten häufig mit Wolfram-Halogen-Lampen, die in einem verhältnismäßig breiten Spektralbereich emittieren und daher zum größten Teil Energie als Wärme und Licht im roten und grünen Wellenlängenbereich abgeben. Nur ca. zwei Prozent der aufgenommenen Leistung wird im Spektralbereich von etwa 400 bis 515 nm emittiert, der für die erwähnten Composite-Materialien mit Campherchinon als Photoinitiator brauchbar ist.

Bei den herkömmlich verwendeten Lichtquellen besteht ferner die Schwierigkeit, daß ihre Lichtleistung über die Lebensdauer in einer für den Benutzer nicht ohne weiteres feststellbaren Weise nachläßt, so daß die Qualität der Polymerisation im Lauf der Zeit abnimmt.

Ein weiterer Nachteil der bekannten Geräte, insbesondere der Handgeräte, besteht darin, daß die zur Wärmeabfuhr notwendige Luftströmung gleichzeitig eine Verteilung von Bakterien bewirkt, wobei die Geräte außerdem aufgrund ihrer zu Belüftungszwecken notwendigerweise offenen Bauform und ihrer Größe schlecht sterilisiert oder desinfiziert werden können.

Der Erfindung liegt die generelle Aufgabe zugrunde, Nachteile, wie sie bei vergleichbaren Geräten nach dem Stand der Technik auftreten, mindestens teilweise zu vermeiden. Eine speziellere Aufgabe der Erfindung besteht darin, ein Gerät zur Lichtpolymerisation von Kunststoffen, insbesondere von mit Campherchinon als Photoinitiator arbeitenden Dentalmaterialien anzugeben, das bei möglichst hohem Wirkungsgrad Licht in dem nutzbaren blauen Spektralbereich erzeugt.

Die erfindungsgemäße Lösung dieser Aufgabe ist im Anspruch 1 gekennzeichnet. Danach verwendet das erfindungsgemäße Lichtpolymerisationsgerät als Lichtquelle einen Festkörperstrahler auf Halbleiterbasis.

Die Verwendung eines derartigen Festkörperstrahlers, wie er etwa aus DE-A-4 330 750 bekannt ist, in einem insbesondere dentalen Polymerisationsgerät ergibt folgende Vorteile:
(1) Da die Lichtemission auf einen bestimmten Wellenlängenbereich, hier den blauen Bereich, begrenzt ist, wird keine zusätzliche Wärme erzeugt. Dies bedeutet, daß das Gerät ohne Lüfter auskommt und daher als geschlossenes, gekapseltes und insgesamt sterilisierbares Gerät herstellbar ist.
(2) Die Vermeidung jeglicher Wärmeerzeugung ist ferner für den Polymerisationsvorgang selbst von Vorteil, da der durch Erwärmungs- und Abkühlungsvorgänge hervorgerufene Schrumpf des Kunststoffmaterials mit der sich daraus ergebenden Gefahr von Randspalten vermieden wird.
(3) Bei Festkörperstrahlern verändert sich die Lichtleistung im Laufe der Zeit nicht. Vielmehr emittieren sie entweder unverändert oder fallen vollständig aus, was für den Anwender sofort erkennbar ist. Eine ungenügende Polymerisation infolge einer nicht oder nur schwer feststellbar nachlassenden Strahlungsleistung ist ausgeschlossen.
(4) Die Tatsache, daß der Festkörperstrahler ausschließlich in dem schmalen nutzbaren Spektralbereich emittiert, bedeutet, daß er bei ausreichender Strahlungsintensität mit geringer Leistungsaufnahme auskommt. Das Gerät kann daher ohne weiteres von einer eingebauten Batterie gespeist werden, so daß die bei den bekannten Geräten erforderlichen Lichtleiter oder Stromversorgungskabel entfallen.
(5) Die geringe Größe des Festkörperstrahlers in Verbindung mit dem Fehlen jeglicher Wärmeentwicklung gestattet es schließlich, das Gerät klein, leicht und handlich zu bauen.

Gemäß Anspruch 2 handelt es sich bei dem Festkörperstrahler vorzugsweise um einen solchen aus Elementen der II. und VI. Hauptgruppe des Periodensystems.

Wird der Festkörperstrahler gemäß der Ausgestaltung der Erfindung nach Anspruch 3 als Halbleiterdiode betrieben, so ergibt sich der Vorteil einer flächigen Abstrahlung bei nicht allzu schmaler Bandbreite. Beide Eigenschaften sind für die Anwendung im Dentalbereich besonders günstig, weil eine größere Abstrahlungsfläche den üblichen Dimensionen der zu bestrahlenden Zahnflächen näher kommt und die größere Spektralbreite der Absorptions-Bandbreite der zu polymerisierenden Moleküle besser entspricht, woraus eine effiziente Polymerisation resultiert.

Ein besonders intensiver Lichtstrahl ergibt sich dagegen beim Betrieb des Festkörperstrahlers im Lasermodus gemäß Anspruch 4.

Die geringe Größe des Festkörperstrahlers gestattet es ferner, ihn gemäß Anspruch 5 unmittelbar an der auf den Behandlungsort richtbaren Spitze des Polymerisationsgerätes anzuordnen. Bei dieser Ausgestaltung ergibt sich der Vorteil besonders geringer Strahlungsverluste.

In der Variante nach Anspruch 6 kann der Festkörperstrahler am Lichteintrittsende eines auf den Behandlungsort richtbaren Lichtleiters angeordnet sein. Auch bei dieser Ausführungsform, bei der sich der Strahler im Innern des Gerätes befindet, läßt sich wegen der fehlenden Wärmeerzeugung ein äußerst kleines und handliches Gerät erzielen.

In der Weiterbildung nach Anspruch 7 enthält das Gerät auch eine Batterie oder einen Akkumulator zur Versorgung des Festkörperstrahlers.

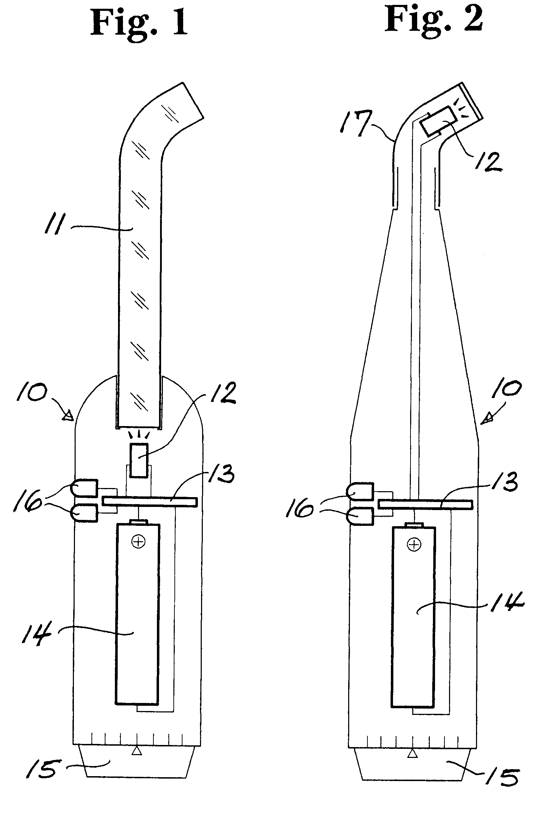

Im folgenden werden zwei Ausführungsbeispiele des erfindungsgemäßen Lichtpolymerisationsgerätes anhand der Figuren 1 und 2 der beigefügten Zeichnung näher erläutert.

Das Gerät nach Figur 1 besteht aus einem Handteil **10**, in dessen vorderes Ende ein Lichtleiterstab **11** eingesteckt ist. Zur praktischeren Handhabung ist Lichtleiterstab **11** ist an seinem Lichtaustrittsende gekrümmt.

Dem Lichteintrittsende des Lichtleiterstabes **11** gegenüber ist ein Festkörperstrahler **12** angeordnet, bei dem es sich um eine im blauen Spektralbereich emittierende Leuchtdiode handelt, die aus Elementen der II. und VI. Hauptgruppe des Periodensystems aufgebaut ist.

Das Handteil **10** enthält ferner eine Leiterplatte **13** mit einer integrierten Schaltung zur Ansteuerung des Festkörperstrahlers **12** und eine Batterie **14** zur Energieversorgung.

An seinem dem Lichtleiterstab **11** gegenüberliegenden Ende ist das Handteil **10** mit einem als Drehknopf ausgebildeten Zeiteinsteller **15** versehen. Zur optischen Anzeige des Betriebszustandes sind ferner seitlich am Handteil **10** zwei Leuchtdioden **16** geringer Strahlungsleistung angeordnet.

Der Lichtleiterstab **11** ist gegenüber dem Handteil **10** drehbar, so daß sich das Lichtaustrittsende in die jeweils günstigste Stellung relativ zum Bestrahlungsort drehen läßt, ohne daß die Stellung des Handteils **10** und damit des Zeiteinstellers **15** und der Anzeigedioden **16** verändert werden muß.

Das Gerät nach Figur 2 unterscheidet sich von dem nach Figur 1 dadurch, daß der Festkörperstrahler **12** unmittelbar an der auf den Behandlungsort richtbaren Spitze des Gerätes angeordnet ist. Der den Strahler **12** enthaltende vordere Geräteteil **17** ist ähnlich wie das Lichtaustrittsende des Lichtleiterstabes **11** nach Figur 1 gekrümmt und gegenüber dem Handteil **10** des Gerätes drehbar, so daß sich die jeweils günstigste Stellung relativ zum Behandlungsort ohne Stellungsänderung des Handteils selbst erreichen läßt.

## Patentansprüche

1. Gerät zur Polymerisation von Kunststoffen, insbesondere von Photoinitiatoren enthaltenden Dentalmaterialien, mittels Licht im blauen Spektralbereich, dadurch **gekennzeichnet**, daß die Lichtquelle ein Festkörperstrahler (**12**) auf Halbleiterbasis ist.

2. Gerät nach Anspruch 1, wobei der Festkörperstrahler (**12**) aus Elementen der II. und VI. Hauptgruppe des Periodensystems aufgebaut ist.

3. Gerät nach Anspruch 1 oder 2, wobei der Strahler (**12**) im LED-Modus arbeitet.

4. Gerät nach Anspruch 1 oder 2, wobei der Strahler (**12**) im Lasermodus arbeitet.

5. Gerät nach einem der Ansprüche 1 bis 4, wobei der Festkörperstrahler (**12**) unmittelbar an der auf den Behandlungsort richtbaren Spitze (**17**) des Gerätes angeordnet ist.

6. Gerät nach einem der Ansprüche 1 bis 4, wobei der Festkörperstrahler (**12**) am Lichteintrittsende eines auf den Behandlungsort richtbaren Lichtleiters (**11**) angeordnet ist.

7. Gerät nach einem der Ansprüche 1 bis 6, das eine Batterie (**14**) oder einen Akkumulator zur Energieversorgung des Festkörperstrahlers (**12**) enthält.
